# EUROPÄISCHE PATENTSCHRIFT

(11) **EP 0 752 207 B1**
(45) Veröffentlichungstag und Bekanntmachung des Hinweises auf die Patenterteilung: **29.12.1997**
(21) Anmeldenummer: 96109722.7
(22) Anmeldetag: 18.06.1996
(51) Int. Cl.: A01K 7/06

(54) **Selbsttränkebecken für Tiere, mit Auslaufventil**
Self-watering apparatus for livestock, with faucet valve
Abreuvoir automatique pour animaux, avec soupape de décharge

(30) Priorität: 03.07.1995 DE 29510767 U
(43) Veröffentlichungstag der Anmeldung: 08.01.1997
(73) Patentinhaber: SUEVIA HAIGES GMBH & CO., 74366 Kirchheim a.N./Württ. (DE)
(72) Erfinder: Haiges, Frank, 74366 Kirchheim a.N./Württ. (DE)
(74) Vertreter: Wolff, Michael, Dipl.-Phys.

(56) Entgegenhaltungen:
- DE-A- 2 546 552
- DE-A- 3 338 483

## Beschreibung

Die Erfindung betrifft ein Selbsttränkebecken mit Wasserauslaufventil, gemäß Oberbegriff des Anspruchs 1, 2 oder 4.
Solche Tränken befinden sich in Abferkelbuchten mit Sauenkäfig (zum Ferkelschutz) am tragseitigen Kopfende desselben auf einer der beiden Käfigseiten, so daß neben der Muttersau auch deren Ferkel Zugang zur Wasserschale haben.
Bei der aus der DE 33 38 483 A1/C2 (Haiges) bekannten Tränkeinrichtung der oben genannten Art ist der als Wasserleitungsrohrstück (16.1) ausgebildete Ventilbetätigungsstab mittig vor der Rückwand (20) angeordnet; der Wasserleitungsstutzen (12) über dem Ventil (14) ist mittels einer Klemmschraube (26) an der durchbohrten Deckwand (22) befestigt; der Beckenkörper (10) ist mit zwei seitlichen gelochten Laschen zur Verschraubung des Beckens mit einer Wand versehen.
Nachteilig ist an der bekannten Tränkeinrichtung insbesondere, daß der mittige Ventilbetätigungsstab für das Maul der Muttersau, die zur Stabauslenkung ihren Kopf schräg zur Käfigachse halten muß, so leicht erreichbar ist, daß sie mit dem Stab spielt und damit überflüssigen Wasserverbrauch verursacht, der unnötig über das hinausgeht, was die Ferkel an stehendem Wasser in der Tränkschale brauchen. Die Folge ist eine Überschwemmung des Buchtbodens.
Der Erfindung liegt daher die Aufgabe zugrunde, eine diesen Nachteil vermeidende Tränkeinrichtung zu schaffen, die den Wasserverbrauch der bekannten Tränkeinrichtung senkt.
Diese Aufgabe ist bei einem Selbsttränkebecken mit Wasserauslaufventil, der eingangs genannten Art erfindungsgemäß durch das kennzeichnende Merkmal des Anspruchs 1 gelöst.
Vorteilhafterweise kann die Muttersau den nur für sie, nicht für die Ferkel, schwierig erreichbaren, in der ihr näherliegenden Beckenecke anzuordnenden Ventilbetätigungsstab nicht ohne Anstrengung auslenken, um Wasser auslaufen zu lassen; deshalb wird sie ihre Bemühungen auf Durstphasen beschränken.

Ausgestaltungen und Weiterbildungen der erfindungsgemäßen Tränkeinrichtung sind Gegenstand der abhängigen Ansprüche 2 bis 7.
Die kennzeichnenden Merkmale des Anspruchs 2 ermöglichen eine einfache 1-Loch-Montage des Ventils ohne das Erfordernis einer abgekröpften, im Abkröpfungsbereich verdoppelten Deckwand (22, 22.2) der bekannten Tränkeinrichtung.
Das besonders vorteilhafte kennzeichnende Merkmal des Anspruchs 3 erlaubt es, ein und dasselbe Becken wahlweise links oder rechts am Sauenkäfig anzuordnen. Diese Wahlmöglichtkeit ist wichtig für Buchten, in denen der Käfig an einer seitlichen Buchtwand angeordnet ist, bei der es sich um die linke oder rechte handeln kann.
Das kennzeichnende Merkmal des Anspruchs 4 vereinfacht die Herstellung eines Beckenkörpers ohne gelochte Laschen und ermöglicht dessen alternative Befestigung an einem Standrohr zum Beispiel des Käfigs statt an einer Wand, die am Ort der Beckenanbringung meistens nicht vorhanden ist.
Das kennzeichnende Merkmal des Anspruchs 5 erleichtert die Anbringung des Beckenkörpers am Standrohr und verhindert eine Drehung des Beckenkörpers um eine waagrechte Achse parallel zur Käfiglängsachse.
Das kennzeichnende Merkmal des Anspruches 6, das eine entsprechende Seitenwandtiefe voraussetzt, verhindert eine zu starke seitliche Auslenkung des Ventilbetätigungsstabes nach außen.
Das kennzeichnende Merkmal des Anspruches 7 leistet das gleiche bei seitlichen Auslenkungen nach innen. Als Anschlag könnte zum Beispiel ein senkrecht von der Beckenrückwand abstehender Steg vorgesehen sein, dessen Tiefe geringer sein kann als die Tiefe (Breite) der Beckenseitenwände.

Im Folgenden ist die Erfindung anhand einer durch die Zeichnung beispielhaft dargestellten, bevorzugten Ausführungsform der erfindungsgemäßen Tränkeinrichtung im Einzelnen erläutert. Es zeigt:
- Fig. 1: eine perspektivische Ansicht der Ausführungsform
- Fig. 2: eine Draufsicht der Ausführungsform, wobei eine Rohrbefestigung und ein Sauenkopf angedeutet sind

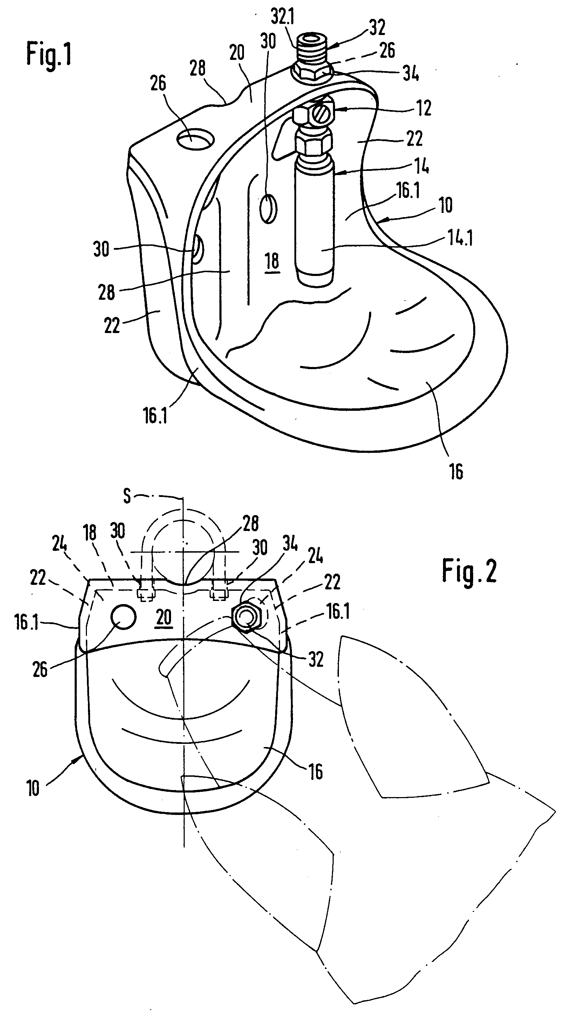

Im Ausführungsbeispiel besteht die erfindungsgemäße Tränkeinrichtung hauptsächlich aus einem Selbsttränkebecken 10 mit Auslaufventil 12, das mittels einer Vorrichtung 14 betätigbar ist.
Das Becken 10 weist eine nach vorn und beiden Seiten ausgerundete Wasserschale 16, eine an den hinteren, geraden Schalenrand nach oben angeformte, im wesentlichen vertikale Rückwand 18 und eine an den oberen Rand der Rückwand 18 nach vorn angeformte, ungefähr waagrechte Deckwand 20 sowie zwei ungefähr parallele, im wesentlichen vertikale Seitenwände 22 auf, die in je zwei seitliche Ränder der Deckwand 20 und der Rückwand 18 sowie in die zwei Seitenwände 16.1 der Schale 16 glatt übergehen.
Auf jeder Beckenseite bilden die dortige Seitenwand 22 und die Rückwand 18 eine sich vertikal nach oben erstreckende Ecke 24, über der in der Deckwand 20 eine von zwei Bohrungen 26 angeordnet ist, die sich auf verschiedenen Seiten der vertikalen Symmetrieebene S des Beckens 10 befinden, welche eine die Rückwand 18 vertiefende, kreiszylindrische Befestigungssicke 28 halbiert, neben der mit gleichem Abstand und in gleicher Höhe zwei Befestigungsbohrungen 30 der Rückwand 18 angeordnet sind, so daß das Becken 10 wie in Fig. 2 angedeutet, mittels Bügelschraube und zwei Muttern an einem vertikalen Standrohr befestigbar ist - oder mittels zweier Dübelschrauben an einer Stallwand oder dergleichen ebener Wandfläche.

Das Ventil 12 befindet sich in einer der beiden Ecken 24 an der Unterseite der Deckwand 20 und schlägt mit seinem Gehäuse an der Berandung der dortigen Bohrung 26 der Deckwand an.
An das Ventilgehäuse schließt nach oben ein vertikaler Wasserleitungsstutzen 32 mit Außengewinde zum Anschluß einer Wasserzuleitung und nach unten bis zum Schalengrund ein allseitig kippbares, stabförmiges Ventilbetätigungsrohr 14.1 der Vorrichtung 14 an, durch das Wasser in die Schale 16 ausfließt, sobald das Ventil 12 durch Rohrkippen geöffnet ist. Dabei dienen die die belegte Ecke 24 begrenzenden Wände 18 und 22 als hinterer bzw. einseitiger Anschlag für das ausgelenkte Rohr 14.1. - Auf das Außengewinde am oberen Ende des Stutzens 32 ist eine Mutter 34 geschraubt, die auf der Oberseite der Deckwand 20 an der Berandung der belegten Bohrung 26 angreift.
Die bauliche Einheit aus Ventil 12, Betätigungsvorrichtung 14 und Stutzen 32 kann nach Wegschrauben der Mutter 34 nach unten aus der belegten Bohrung 26 der Deckwand 20 herausgezogen, seitlich zur anderen Bohrung 26 waagrecht versetzt und dort nach oben in diese hineingesteckt werden, worauf nur noch die Mutter 34 aufgeschraubt werden muß, um den Platzwechsel von einer Bohrung 26 zur anderen abzuschließen.
Als seitliche Anschläge für das nach innen gekippte Rohr 14.1 können Verlängerungen der freien, mit den Muttern belegten Enden der Bügelschraube nach vorn dienen; vgl. Fig. 2.

## Patentansprüche

1. Selbsttränkebecken (10) für Sauen und deren Ferkel, mit einer Wasserschale (16) sowie einer an den hinteren Schalenrand nach oben angeformten, im wesentlichen vertikalen Rückwand (18), an deren seitliche Ränder je eine im wesentlichen vertikale Seitenwand (22) angeformt ist; und mit einem wenigstens nach hinten auslenkbaren, normalerweise vertikal hängenden Stab (14.1) zur Betätigung eines über der Schale (16) angeordneten Wasserauslaufventiles (12) dadurch **gekennzeichnet**, daß der Ventilbetätigungsstab (14.1) in einer der zwei Ecken (24) angeordnet ist, die mittels der Rückwand (18) und je einer Seitenwand (22) gebildet sind.

2. Selbsttränkebecken (10) mit Wasserauslaufventil (12), das an einer an den oberen Rand der Rückwand (18) angeformten Deckwand (20) angeordnet und mit einem vertikalen Wasserleitungsstutzen (32) versehen ist, nach Anspruch 1, dadurch **gekennzeichnet**, daß die Deckwand (20) über mindestens einer der beiden Ecken (24) eine Bohrung (26) aufweist, durch die der mit einem Außengewinde (32.1) versehene Stutzen (32) von unten her bis zum Anschlag des Ventilgehäuses an der Deckwand (20) gesteckt ist; und daß von oben her auf das Außengewinde (32.1) eine Mutter (34) geschraubt ist, die an der Deckwand (20) angreift.

3. Selbsttränkebecken (10) mit Wasserauslaufventil (12), nach Anspruch 2, dadurch gekennzeichnet, daß in jeder Ecke (24) eine Bohrung (26) vorhanden und das Ventil (12) von einer Ecke zur anderen versetzbar ist.

4. Selbsttränkebecken (10) mit Wasserauslaufventil (12), mit zwei waagrechten Bohrungen (30) an der Rückwand (18) zur Befestigung derselben an einer anderen Wand oder an einem Standrohr, nach einem der Ansprüche 1 bis 3, dadurch **gekennzeichnet**, daß die beiden Bohrungen (30) in der Rückwand (18) beidseitig der vertikalen Mittellinie derselben zur Aufnahme von Schrauben angeordnet sind.

5. Selbsttränkebecken (10) mit Wasserauslaufventil (12), nach Anspruch 4, dadurch gekennzeichnet, daß die Rückwand (18) längs ihrer Mittellinie (S-Spur) eine kreiszylindrische Vertiefung (28) nach vorn aufweist, die um ein Standrohr legbar ist.

6. Selbsttränkebecken (10) mit Wasserauslaufventil (12), nach einem der Ansprüche 1 bis 5, dadurch gekennzeichnet, daß der Ventilbetätigungsstab (14.1) bei seitlicher Auslenkung nach außen an der ihm näherstehenden Seitenwand (22) anschlägt.

7. Selbsttränkebecken (10) mit Wasserauslaufventil (12), nach einem der Ansprüche 1 bis 6, gekennzeichnet durch je einen auf der Vorderseite der Rückwand (18) angeordneten Anschlag für den seitlich nach innen ausgelenkten Ventilbetätigungsstab (14.1)

## Claims

1. Automatic drinking bowl (10) for sows and their youngs, with a water bowl (16) having at its rear side an upward extending essentially vertical backwall (18) at the side edges of which two essentially vertical side walls (22) each are provided; further with an at least backward yielding normally vertically hanging rod (14.1) for the activation of a water outlet valve (12) provided above the bowl (16), **characterized** in that the valve activating rod (14.1) is provided in one of the two corners (24) which are formed by the backwall (18) and one of the side walls (22).

2. Automatic drinking bowl (10) with a water outlet valve (12) provided at a top wall (20) extending from the upper edge of the backwall (18) and having a vertical water pipe connection piece (32), as set forth in claim 1, characterized in that the top wall (20) on at least one of the two corners (24) has a bore (26) into which the connection piece (32) with external thread (32.1) is inserted from below until the valve housing stops at the top wall (20), and that from above a nut (34) is screwed on to the external thread (32.1) to provide close fit at the top wall (20).

3. Automatic drinking bowl (10) with water outlet valve (12) as set forth in claim 2 characterized in that each corner (24) has a bore (26) and the valve (12) can be moved from one corner to the other.

4. Automatic drinking bowl (10) with water outlet valve (12) and with two horizontal bores (30) at the backwall (18) for the fixing of said backwall to another wall or to a standpipe, as set forth in one of claims 1 to 3, characterized in that each of the two bores (30) is provided on each side of the vertical middle line of the backwall (18) for the insertion of screws.

5. Automatic drinking bowl (10) with water outlet valve (12) as set forth in claim 4 characterized in that the backwall (18) has a cylindrical chase (28) along its middle line into which a standpipe fits.

6. Automatic drinking bowl (10) with water outlet valve (12) as set forth in one of claims 1 to 5 characterized in that the valve activating rod (14.1) when it turns aside in outward direction stops at the side wall (22) close to it.

7. Automatic drinking bowl (10) with water outlet valve (12) as set forth in one of claims 1 to 6 characterized in that one stop each is provided at the front side of the backwall (18) to stop the valve activation rod (14.1) when it turns aside inwardly.

## Revendications

1. Abreuvoir automatique (10) pour truies et leurs porcelets, comprenant une cuvette à eau (16), une paroi arrière (18) globalement verticale qui est rapportée vers le haut sur le bord arrière de la cuvette et sur chaque bord latéral de laquelle est rapportée une paroi latérale (22) globalement verticale, et une tige (14.1) qui pend normalement à la verticale, qui est apte à pivoter au moins vers l'arrière et qui est destinée à actionner un robinet d'eau (12) disposé au-dessus de la cuvette (16), **caractérisé** en ce que la tige d'actionnement de robinet (14.1) est disposée dans l'un des deux coins (24) qui sont définis grâce à la paroi arrière (18) et aux parois latérales respectives (22).

2. Abreuvoir automatique (10) comportant un robinet d'eau (12) qui est disposé sur une paroi supérieure (20) rapportée sur le bord supérieur de la paroi arrière (18) et qui est pourvu d'une tubulure verticale de conduite d'eau (32), selon la revendication 1, **caractérisé** en ce que la paroi supérieure (20) présente sur l'un au moins des coins (24) un perçage (26) par lequel la tubulure (32) pourvue d'un filetage extérieur (32.1) est introduite par le bas jusqu'à ce que l'enveloppe de robinet bute contre la paroi supérieure (20), et en ce qu'il est prévu, vissé par le haut sur le filetage extérieur (32.1), un écrou (34) qui agit sur la paroi supérieure (20).

3. Abreuvoir automatique (10) à robinet d'eau (12) selon la revendication 2, **caractérisé** en ce qu'un perçage (26) est prévu dans chaque coin (24) et le robinet (12) peut être déplacé d'un coin à l'autre.

4. Abreuvoir automatique (10) à robinet d'eau (12), comportant deux perçages horizontaux (30), sur la paroi arrière (18), destinés à fixer celle-ci à une autre paroi ou à un tuyau vertical, selon l'une des revendications 1 à 3, **caractérisé** en ce que les deux perçages (30) de la paroi arrière (18) sont disposés de part et d'autre de la ligne médiane verticale de ladite paroi (18) afin de recevoir des vis.

5. Abreuvoir automatique (10) à robinet d'eau (12) selon la revendication 4, **caractérisé** en ce que la paroi arrière (18) présente, le long de sa ligne médiane (marque S), un creux cylindrique (28) vers l'avant qui est apte à être placé autour d'un tuyau vertical.

6. Abreuvoir automatique (10) à robinet d'eau (12) selon l'une des revendications 1 à 5, **caractérisé** en ce que la tige d'actionnement de robinet (14.1), lorsqu'elle pivote latéralement vers l'extérieur, bute contre la paroi latérale (22) la plus proche.

7. Abreuvoir automatique (10) à robinet d'eau (12) selon l'une des revendications 1 à 6, **caractérisé** par une butée disposée sur le côté avant de la paroi arrière (18), pour la tige d'actionnement de robinet (14.1) qui a pivoté vers l'intérieur.
